# EUROPEAN PATENT APPLICATION

(11) **EP 4 788 032 A1**
(43) Date of publication of application: **05.08.2026**
(21) Application number: 23953599.0
(22) Date of filing: 27.09.2023
(51) Int. Cl.: H04W 72/541

(54) **METHOD FOR SOLVING MEASUREMENT GAP COLLISION, TERMINAL, NETWORK DEVICE, AND STORAGE MEDIUM**

(71) Applicant: Beijing Xiaomi Mobile Software Co., Ltd., Beijing (CN)
(72) Inventor: HU, Ziquan, Beijing 100085 (CN)
(74) Representative: Dehns Germany Partnerschaft mbB
(86) International application number: PCT/CN2023/122354
(87) International publication number: WO 2025/065447

(57) **Abstract**

The present disclosure relates to the technical field of communication, and specifically relates to a method for solving a measurement gap collision, a terminal, a network device, a communication device, and a storage medium. The method for solving a measurement gap collision comprises: a terminal sends a first message to a network device, wherein the first message is used for indicating a measurement gap collision solution preferred by the terminal. According to the present disclosure, when multiple solutions for a multiple measurement gap collision are defined, the terminal may indicate a preferred solution to the network device by means of the first message, allowing the network device to become aware of the solution preferred by the terminal; consequently, taking into account the preferred solution, the network device may determine measurement gap configuration information for the terminal, thereby improving flexibility in the terminal solving collisions between different measurement time slots.

## Description

### TECHNICAL FIELD

The present disclosure relates to a field of communication technologies, in particular to a method for solving a measurement gap collision, a terminal, a network device, and a storage medium.

### BACKGROUND

A Multi-Universal Subscriber Identity Module (Multi-SIM or MUSIM) terminal supports multiple SIM cards and may connect to multiple networks. In a 3rd Generation Partnership Project (3GPP), the MUSIM terminal may support multiple networks (NWs) simultaneously, such as simultaneously supporting network A (NW A) and network B (NW B).

In the 3GPP, a measurement gap (MUSIM gap) is introduced for MUSIM measurement to enable measurement of NW B. In some embodiments, a collision may occur between different measurement gaps.

Several solutions for the measurement gap collision have been defined, but some technical issues still exist.

### SUMMARY

Embodiments of the present disclosure provide a method for solving a measurement gap collision, a terminal, a network device, and a storage medium, addressing the technical problem in the related art of which processing solution the terminal should use when multiple solutions for the measurement gap collision are defined.

According to a first aspect of the present disclosure, a method for solving a measurement gap collision is provided. The method is performed by a terminal, and the method includes: sending a first message to a network device, where the first message indicates a solution preferred by the terminal for the measurement gap collision.

According to a second aspect of the present disclosure, a method for solving a measurement gap collision is provided. The method is performed by a network device, and the method includes: receiving a first message sent by a terminal, where the first message indicates a solution preferred by the terminal for the measurement gap collision.

According to a third aspect of the present disclosure, an apparatus for solving a measurement gap collision is provided. The apparatus includes: a transceiver module, configured to send a first message to a network device, where the first message indicates a solution preferred by a terminal for the measurement gap collision.

According to a fourth aspect of the present disclosure, an apparatus for solving a measurement gap collision is provided. The apparatus includes: a transceiver module, configured to receive a first message sent by a terminal, where the first message indicates a solution preferred by the terminal for the measurement gap collision.

According to a fifth aspect of the present disclosure, a terminal is provided. The terminal includes one or more processors. The terminal is configured to perform the method for solving a measurement gap collision described in the first aspect above.

According to a sixth aspect of the present disclosure, a network device is provided. The network device includes one or more processors. The network device is configured to perform the method for solving a measurement gap collision described in the second aspect above.

According to a seventh aspect of the present disclosure, a communication device is provided. The communication device includes one or more processors. The one or more processors are configured to invoke instructions to cause the communication device to perform the method for solving a measurement gap collision described in the first aspect and/or the method for solving a measurement gap collision described in the second aspect.

According to an eighth aspect of the present disclosure, a communication system is provided. The system includes a terminal and a network device, where the terminal is configured to implement the method for solving a measurement gap collision as described in the first aspect, and the network device is configured to implement the method for solving a measurement gap collision as described in the second aspect.

According to a ninth aspect of the present disclosure, a storage medium storing instructions is provided. When the instructions are executed on a communication device, the communication device is caused to perform the method for solving a measurement gap collision described in the first aspect and/or the method for solving a measurement gap collision described in the second aspect.

According to embodiments of the present disclosure, the terminal may send the first message to the network device, where the first message indicates a solution preferred by the terminal for the measurement gap collision. Accordingly, when multiple solutions for the measurement gap collision are defined, the terminal may indicate the solution preferred by the terminal to the network device via the first message, so that the network device may know the solution preferred by the terminal. Then, the network device may determine, in combination with the solution preferred by the terminal, the measurement gap configuration information for the terminal, thereby improving flexibility of the terminal in solving collisions between different measurement gaps.

### BRIEF DESCRIPTION OF THE DRAWINGS

To more clearly illustrate the technical solutions in embodiments of the present disclosure, the accompanying drawings used in the description of the embodiments will be briefly introduced below. Obviously, the accompanying drawings described below are only some embodiments of the present disclosure. For those skilled in the art, other drawings may be obtained based on these drawings without creative effort.
Fig. 1 is a schematic diagram of an architecture of a communication system according to an embodiment of the present disclosure.
Fig. 2 is an interactive schematic diagram illustrating a method for solving a measurement gap collision according to an embodiment of the present disclosure.
Fig. 3 is a schematic flowchart illustrating a method for solving a measurement gap collision according to an embodiment of the present disclosure.
Fig. 4 is a schematic flowchart illustrating another method for solving a measurement gap collision according to an embodiment of the present disclosure.
Fig. 5 is an interactive schematic diagram illustrating a method for solving a measurement gap collision according to an embodiment of the present disclosure.
Fig. 6 is an interactive schematic diagram illustrating another method for solving a measurement gap collision according to an embodiment of the present disclosure.
Fig. 7 is a schematic block diagram of an apparatus for solving a measurement gap collision according to an embodiment of the present disclosure.
Fig. 8 is a schematic block diagram of another apparatus for solving a measurement gap collision according to an embodiment of the present disclosure.
Fig. 9 is a structural schematic diagram of a communication device provided in an embodiment of the present disclosure.
Fig. 10 is a structural schematic diagram of a chip provided in an embodiment of the present disclosure.

### DETAILED DESCRIPTION

Embodiments of the present disclosure provide a method and an apparatus for solving a measurement gap collision, a terminal, a network device, a communication device, and a storage medium.

In a first aspect, embodiments of the present disclosure provide a method for solving a measurement gap collision. The method is performed by a terminal, and the method includes: sending a first message to a network device, where the first message indicates a solution preferred by the terminal for the measurement gap collision.

In the above embodiments, the terminal may send the first message to the network device, where the first message may indicate the solution preferred by the terminal to the measurement gap collision. Accordingly, when multiple solutions for the measurement gap collision are defined, the terminal may indicate the solution preferred by the terminal to the network device via the first message, so that the network device may know the terminal's preferred solution. Then, the network device may determine, in combination with the solution preferred by the terminal, measurement gap configuration information for the terminal, thereby improving the terminal's flexibility in solving collisions between different measurement gaps.

In conjunction with some embodiments of the first aspect, in some embodiments, the solution includes at least one of:
a first solution, where the first solution is that the terminal keeps all colliding measurement gaps; or
a second solution, where the second solution is that the terminal performs measurement according to priority information of colliding measurement gaps.

In conjunction with some embodiments of the first aspect, in some embodiments, the method further includes: receiving a second message sent by a network device, where the second message indicates allowing the terminal to report the preferred solution for the measurement gap collision.

In conjunction with some embodiments of the first aspect, in some embodiments, the method further includes: determining whether the network device allows the terminal to use the solution preferred by the terminal according to an indication from the network device.

In conjunction with some embodiments of the first aspect, in some embodiments, a manner in which the network device indicates whether the terminal is allowed to use the solution preferred by the terminal includes at least one of: an explicit indication; or an implicit indication.

In conjunction with some embodiments of the first aspect, in some embodiments, the manner includes the explicit indication, and determining whether the network device allows the terminal to use the solution preferred by the terminal according to the indication from the network device includes:
receiving a third message sent by the network device, where the third message includes third information, and the third information indicates whether the terminal is allowed to use the solution preferred by the terminal; and
determining that the network device allows the terminal to use the solution preferred by the terminal according to the third information indicating that the terminal is allowed to use the solution preferred by the terminal; or determining that the network device does not allow the terminal to use the solution preferred by the terminal according to the third information indicating that the terminal is not allowed to use the solution preferred by the terminal.

In the above embodiments, the network device may explicitly indicate to the terminal whether the terminal is allowed to use the solution preferred by the terminal via the third information contained in the third message, thereby improving the reliability of the network device's indication.

In conjunction with some embodiments of the first aspect, in some embodiments, the manner includes the implicit indication, and determining whether the network device allows the terminal to use the solution preferred by the terminal according to the indication from the network device includes:
receiving a fourth message sent by the network device, where the fourth message includes measurement gap configuration information configured by the network device for the terminal, and determining that the network device allows the terminal to use the solution preferred by the terminal according to the measurement gap configuration information.

In the above embodiments, since the network device only sends the measurement gap configuration information configured for the terminal when the network device allows the terminal to use the solution preferred by the terminal, the network device may implicitly indicate to the terminal that the terminal is allowed to use the solution preferred by the terminal via the measurement gap configuration information contained in the fourth message, thereby reducing the signaling interaction between the terminal and the network device.

In conjunction with some embodiments of the first aspect, in some embodiments, the manner includes the implicit indication, and determining whether the network device allows the terminal to use the solution preferred by the terminal according to the indication from the network device includes:
determining that the network device does not allow the terminal to use the solution preferred by the terminal in response to a first timer expiring, where the first timer is started or restarted when the terminal sends the first message to the network device.

In the above embodiments, since in a case that the network device allows the terminal to use the solution preferred by the terminal, the network device will indicate to the terminal whether the network device allows the terminal to use the solution preferred by the terminal, or will send the measurement gap configuration information, that is configured for the terminal, to the terminal, the terminal may be configured with the first timer. If the first timer expires and the terminal does not receive the third information or the measurement gap configuration information sent by the network device, it may be determined that the network device implicitly indicates to the terminal that the network device does not allow the terminal to use the solution preferred by the terminal, thereby reducing the signaling interaction between the terminal and the network device.

In conjunction with some embodiments of the first aspect, in some embodiments, the method further includes: after determining that the network device does not allow the terminal to use the solution preferred by the terminal, resending the first message to the network device.

In conjunction with some embodiments of the first aspect, in some embodiments, resending the first message to the network device includes: resending the first message to the network device in response to a second timer expiring, where the second timer is started or restarted when the terminal sends the first message to the network device.

In the above embodiments, if the terminal expects to use the solution preferred by the terminal, and the network device does not allow the terminal to use the solution preferred by the terminal after the terminal reports the solution preferred by the terminal to the network device, the terminal may re-report the solution preferred by the terminal to the network device.

In conjunction with some embodiments of the first aspect, in some embodiments, the method further includes: after determining that the network device does not allow the terminal to use the solution preferred by the terminal, using a solution different from the solution preferred by the terminal.

In the above embodiments, if the terminal reports the solution preferred by the terminal to the network device, but the network device does not allow the terminal to use that solution, the terminal may default to using another solution that is different from the solution preferred by the terminal without re-reporting. In other words, the network device determines the solution that the terminal may use when the collision occurs between different measurement gaps, thereby ensuring the communication performance of the current network corresponding to the network device as much as possible.

In conjunction with some embodiments of the first aspect, in some embodiments, the method further includes: after determining that the network device does not allow the terminal to use the solution preferred by the terminal, using the solution preferred by the terminal, or using a solution different from the solution preferred by the terminal.

In the above embodiments, when the network device does not allow the terminal to use the solution preferred by the terminal, the terminal may select which solution to use on its own. That is, the protocol does not require the act of the terminal in this case, thereby ensuring that the terminal may use the solution preferred by the terminal when the collision occurs between different measurement gaps, and improving the flexibility of the terminal in solving collisions between different measurement gaps.

In a second aspect, embodiments of the present disclosure provide a method for solving a measurement gap collision. The method is performed by a network device, and the method includes: receiving a first message sent by a terminal, where the first message indicates a solution preferred by the terminal for the measurement gap collision.

In the above embodiments, the network device may receive the first message sent by the terminal, where the first message may indicate the solution preferred by the terminal for the measurement gap collision. Accordingly, when multiple solutions for the measurement gap collision are defined, the terminal may indicate the solution preferred by the terminal to the network device via the first message, so that the network device may know the terminal's preferred solution. Then, the network device may determine, in combination with the solution preferred by the terminal, the measurement gap configuration information for the terminal, thereby improving the terminal's flexibility in solving collisions between different measurement gaps.

In conjunction with some embodiments of the second aspect, in some embodiments, the solution includes at least one of:
a first solution, where the first solution is that the terminal keeps all colliding measurement gaps; or
a second solution, where the second solution is that the terminal performs measurement according to priority information of colliding measurement gaps.

In conjunction with some embodiments of the second aspect, in some embodiments, the method further includes sending a second message to the terminal, where the second message indicates allowing the terminal to report the preferred solution for the measurement gap collision.

In conjunction with some embodiments of the second aspect, in some embodiments, the method further includes: indicating to the terminal whether the terminal is allowed to use the solution preferred by the terminal.

In conjunction with some embodiments of the second aspect, in some embodiments, a manner of indicating to the terminal whether the terminal is allowed to use the solution preferred by the terminal includes at least one of: an explicit indication; or an implicit indication.

In conjunction with some embodiments of the second aspect, in some embodiments, the manner includes the explicit indication, and indicating to the terminal whether the terminal is allowed to use the solution preferred by the terminal includes:
sending a third message to the terminal, where the third message includes third information, and the third information indicates whether the terminal is allowed to use the solution preferred by the terminal.

In conjunction with some embodiments of the second aspect, in some embodiments, the manner includes the implicit indication, and indicating to the terminal whether the terminal is allowed to use the solution preferred by the terminal includes:
sending a fourth message to the terminal, where the fourth message includes measurement gap configuration information configured by the network device for the terminal, and the measurement gap configuration information is used by the terminal to determine that the network device allows the terminal to use the solution preferred by the terminal;
   or
determining not to allow the terminal to use the solution preferred by the terminal, where the network device is not expected to send the third message or the fourth message to the terminal.

In conjunction with some embodiments of the second aspect, in some embodiments, the network device indicates to the terminal that the terminal is not allowed to use the solution preferred by the terminal, and
the method further includes: receiving the first message resent by the terminal.

In conjunction with some embodiments of the second aspect, in some embodiments, the network device indicates to the terminal that the terminal is not allowed to use the solution preferred by the terminal, and the network device expects the terminal to use a solution different from the solution preferred by the terminal.

In a third aspect, embodiments of the present disclosure provide an apparatus for solving a measurement gap collision. The apparatus includes:
a transceiver module, configured to send a first message to a network device, where the first message indicates a solution preferred by a terminal for the measurement gap collision.

In a fourth aspect, embodiments of the present disclosure provide an apparatus for solving a measurement gap collision. The apparatus includes:
a transceiver module, configured to receive a first message sent by a terminal, where the first message indicates a solution preferred by the terminal for the measurement gap collision.

In a fifth aspect, embodiments of the present disclosure provide a terminal. The terminal includes one or more processors. The terminal is configured to perform the method for solving a measurement gap collision as described in the first aspect and embodiments of the first aspect.

In a sixth aspect, embodiments of the present disclosure provide a network device. The network device includes one or more processors. The network device is configured to perform the method for solving a measurement gap collision as described in the second aspect and embodiments of the second aspect.

In a seventh aspect, embodiments of the present disclosure provide a communication device. The communication device includes: one or more processors; and one or more memories for storing instructions, where the processors are configured to invoke the instructions to cause the communication device to perform the methods described in the first aspect, the second aspect, and embodiments of the first and second aspects.

In an eighth aspect, embodiments of the present disclosure provide a communication system. The system includes a terminal and a network device. The terminal is configured to perform the methods described in the first and second aspects, and embodiments of the first and second aspects, and the network device is configured to perform the methods described in the first and second aspects, and embodiments of the first and second aspects.

In a ninth aspect, embodiments of the present disclosure provide a storage medium storing instructions that, when executed on a communication device, cause the communication device to perform the methods described in the first and second aspects, and embodiments of the first and second aspects.

In a tenth aspect, embodiments of the present disclosure provide a program product that, when executed by a communication device, causes the communication device to perform the methods described in the first and second aspects, and embodiments of the first and second aspects.

In an eleventh aspect, embodiments of the present disclosure provide a computer program that, when run on a computer, causes the computer to perform the methods described in the first and second aspects, and embodiments of the first and second aspects.

It is understood that the aforementioned terminal, network device, communication device, communication system, storage medium, program product, and computer program are all used to execute methods provided in embodiments of the present disclosure. Therefore, for the beneficial effects they may achieve, reference may be made to the beneficial effects of the corresponding methods, and will not be repeated here.

The present disclosure provides a method for solving a measurement gap collision, a terminal, a network device, a communication device, and a storage medium. In some embodiments, the terms "method for solving a measurement gap collision" and "information processing method" and "communication method" may be used interchangeably; the terms "terminal" and "network device" may be used interchangeably with "apparatus for solving a measurement gap collision" and "communication device"; and the terms "system for solving a measurement gap collision" and "communication system" may be used interchangeably.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, implementations in a certain embodiment may be arbitrarily combined. Furthermore, various embodiments may be arbitrarily combined, for example, some or all steps of different embodiments may be arbitrarily combined, and a certain embodiment may be arbitrarily combined with implementations of other embodiments.

In respective embodiments of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like..

For example, in a case where an article such as "a", "an", and "the" in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments of the present disclosure, descriptions such as "at least one of A or B", "A and/or B", "A in one case and B in another case", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments, the expression such as "A or B" includes solution depending on the situation: in some embodiments, A (A is executed regardless of B); in some embodiments, B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, reference may be made to to the description of the context in the claims or the embodiments, and should not constitute unnecessary restrictions due to the use of the prefix words.

For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and their types may be the same or different. For another example, when the description object is "information", the "first information" and the "second information" may be the same information or different information, and their contents may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining that", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and their names are not limited to those described in embodiments.

Terms such as "apparatus", "equipment", "device", "circuit", "network element", "node", "function", "unit", "section", "system", "network", "chip", "chip system", "entity", "body" and the like may be replaced with each other.

In some embodiments, the "network" may be interpreted as an apparatus included in the network, for example, an access network device, a core network device, or the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "component carrier", "bandwidth part (BWP)" and the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be replaced with each other.

In some embodiments, the access network device, the core network device, or the network device may be replaced with the terminal. For example, each embodiment of the present disclosure may be applied to a configuration in which communication between the access network device, the core network device, or the network device and the terminal is replaced with communication between multiple terminals (for example, it may also be referred to as a device-to-device (D2D), a vehicle-to-everything (V2X), or the like). In this case, the terminal may have all or a part of the functions of the access network device. Further, terms such as "uplink" and "downlink" may be replaced with terms corresponding to communication between terminals (for example, "side"). For example, an uplink channel, a downlink channel and the like may be replaced with a side channel, and an uplink, a downlink and the like may be replaced with a side link.

In some embodiments, the terminal may be replaced with the access network device, the core network device, or the network device. In this case, the access network device, the core network device, or the network device may have all or a part of the functions of the terminal.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

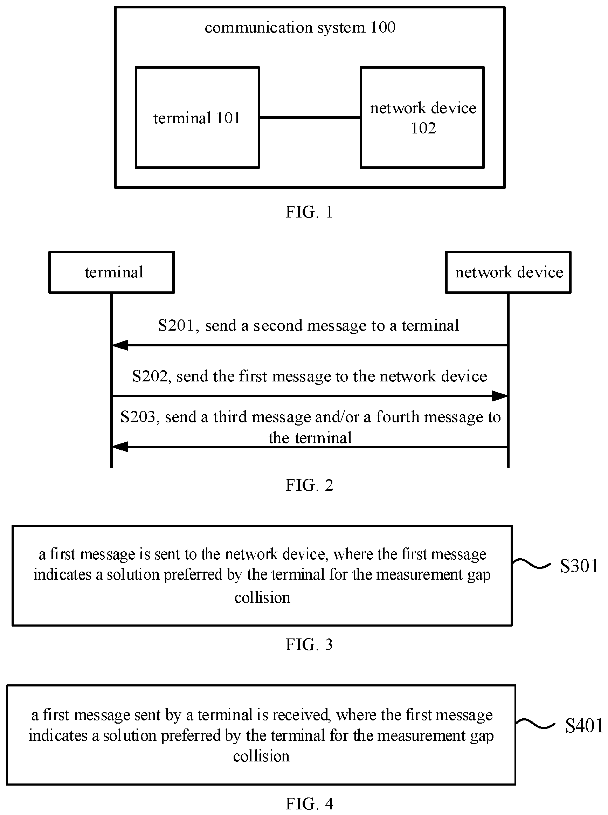

Fig. 1 is a schematic diagram of an architecture of a communication system according to an embodiment of the present disclosure.

As shown in Fig. 1, the communication system 100 includes a terminal 101 and a network device 102, where the network device includes at least one of: an access network device or a core network device.

In some embodiments, terminal 101 includes for example, but is not limited to, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home.

In some embodiments, the access network device is for example, but is not limited to, a node or device that accesses a terminal to a wireless network, and the access network device may include at least one of an evolved NodeB (eNB) in a 5G system, a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system.

In some embodiments, the core network device may be a single device, including one or more network elements, or it may be multiple devices or a group of devices, each including all or part of the aforementioned one or more network elements. The network elements may be virtual or physical. The core network includes, for example, at least one of an Evolved Packet Core (EPC), a 5G Core Network (5GCN), or a Next Generation Core (NGC).

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited here.

In some embodiments, the terminal may be a terminal that supports a Multi-Universal Subscriber Identity Module (Multi-SIM or MUSIM) capability.

In some embodiments, the network device may correspond to a first network, such as NW A.

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the subjects, which is not limited in embodiments of the present disclosure. Each subject shown in FIG. 1 is an example, and the communication system may include all or some of the subjects shown in FIG. 1, or other subjects other than those shown in FIG. 1, the number and form of the subjects are arbitrary, the connection relationship between the subjects is an example, and the subjects may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

Fig. 2 is an interactive schematic diagram illustrating a method for solving a measurement gap collision according to an embodiment of the present disclosure.

As shown in Fig. 2, the method for solving a measurement gap collision includes the following steps.

In step S201, a network device sends a second message to a terminal.

In some embodiments, the terminal may be a terminal that supports a capability of a Multi-Universal Subscriber Identity Module (Multi-SIM or MUSIM), and the network device may correspond to a first network, such as network A (NW A).

In some embodiments, the second message indicates allowing the terminal to report a preferred solution for the measurement gap collision.

In an implementation, the second message may include a Radio Resource Control (RRC) message. For example, the second message may be an RRC Reconfiguration message.

In some embodiments, the second message may include second information, where the second information indicates allowing the terminal to report the preferred solution for the measurement gap collision.

In an implementation, the second information may be measurement gap collision assistance configuration information carried in an RRC reconfiguration message, where the measurement gap collision assistance configuration information may indicate that the network device allows the terminal to report the preferred solution for the measurement gap collision.

In some embodiments, the terminal may receive the second message sent by the network device.

In some embodiments, the solution includes at least one of: a first solution or a second solution. The first solution is that the terminal keeps all colliding measurement gaps; and the second solution is that the terminal performs measurement according to priority information of colliding measurement gaps.

It should be noted that the first solution involved in the present disclosure may also be described as a keep solution, and the second solution involved in the present disclosure may also be described as a priority-based solution.

In an implementation, when a collision occurs between different measurement gaps, the terminal uses the first solution, which may keep all colliding measurement gaps and perform measurement corresponding to all measurement gaps.

In another implementation, when a collision occurs between different measurement gaps, the terminal uses the second solution, i.e., the terminal performs measurement corresponding to the highest priority measurement gap, according to an order of priorities of the respective colliding measurement gaps from high to low.

In the above embodiments, description is presented by taking predefined multiple solutions including the first solution and the second solution as an example in the present disclosure. When two or more solutions are predefined, or when solutions other than the first solution and the second solution are predefined, the terminal may also indicate to the network device that other solutions preferred by the terminal, which is not limited in the present disclosure.

In some embodiments, if the second message includes an indication that the terminal is not allowed to report the solution preferred by the terminal for the measurement gap collision, then the terminal is not expected to send a first message to the network device, or the terminal may send the first message to the network device and the network device will not process the first message.

In some embodiments, if the terminal does not receive the indication from the network device that allows the terminal to report the preferred solution for the measurement gap collision (i.e., the second message), then the terminal is not expected to send the first message to the network device, or the terminal may send the first message to the network device and the network device will not process the first message.

In step S202, the terminal sends the first message to the network device.

In some embodiments, the first message indicates a solution preferred by the terminal for the measurement gap collision.

In an implementation, the first message includes a UE Assistance Information (UAI) message.

In some embodiments, the first message includes first information, where the first information indicates a solution preferred by the terminal for the measurement gap collision.

In an implementation, the first information may be solution preference information carried in the UAI message. The solution preference information may indicate at least one solution preferred by the terminal among the predefined plurality of solutions.

In some embodiments, the network device receives the first message sent by the terminal.

In the above embodiments, when multiple solutions for the measurement gap collision are defined, the terminal may indicate the solution preferred by the terminal to the network device via the first message, so that the network device may know the terminal's preferred solution. Then the network device may determine, in combination with the solution preferred by the terminal, measurement gap configuration information for the terminal, thereby improving the terminal's flexibility in handling collisions between different measurement gaps.

In some embodiments, the network device indicates to the terminal whether the terminal is allowed (or granted) to use the solution preferred by the terminal.

In some embodiments, a manner in which the network device indicates whether the terminal is allowed to use the solution preferred by the terminal includes at least one of: an explicit indication; or an implicit indication.

In step S203, the network device sends a third message and/or a fourth message to the terminal.

In some embodiments, the third message includes third information, and the third information indicates whether the terminal is allowed to use the solution preferred by the terminal.

In some embodiments, the third message may include an RRC message. For example, the third message may be an RRC Reconfiguration message.

In some embodiments, the third information may be solution grant information carried in the RRC reconfiguration message, where the solution grant information may indicate whether the network device allows the terminal to use at least one solution.

In some embodiments, the terminal determines that the network device allows the terminal to use the solution preferred by the terminal according to the third information indicating that the terminal is allowed to use the solution preferred by the terminal; or the terminal determines that the network device does not allow the terminal to use the solution preferred by the terminal according to the third information indicating that the terminal is not allowed to use the solution preferred by the terminal.

In the above embodiments, the network device may explicitly indicate to the terminal whether the terminal is allowed to use the solution preferred by the terminal via the third information contained in the third message, thereby improving the reliability of the network device's indication.

In some embodiments, the fourth message includes an RRC message. For example, the fourth message may be an RRC Reconfiguration message.

In some embodiments, the fourth message may carry measurement gap configuration information configured by the network device for the terminal, and the measurement gap configuration information is used by the terminal to determine whether the network device allows the terminal to use the solution preferred by the terminal.

In some embodiments, the terminal determines, according to the measurement gap configuration information, that the network device allows the terminal to use the solution preferred by the terminal.

In the above embodiments, since the network device only sends the measurement gap configuration information configured for the terminal when the network device allows the terminal to use the solution preferred by the terminal, the network device may implicitly indicate to the terminal that the terminal is allowed to use the solution preferred by the terminal via the measurement gap configuration information contained in the fourth message, thereby reducing the signaling interaction between the terminal and the network device.

In some embodiments, the terminal receives the third message and/or the fourth message sent by the network device.

In some embodiments, the terminal is configured with a first timer, where the first timer is started or restarted when the terminal sends the first message to the network device.

In some embodiments, when the first timer expires, the terminal determines that the network device does not allow the terminal to use the solution preferred by the terminal.

In the above embodiments, since in a case that the network device allows the terminal to use the solution preferred by the terminal, the network device will indicate to the terminal whether the network device allows the terminal to use the solution preferred by the terminal, or will send the measurement gap configuration information, that is configured for the terminal, to the terminal, the terminal may be configured with the first timer. If the first timer expires and the terminal does not receive the third information or the measurement gap configuration information sent by the network device, it may be determined that the network device implicitly indicates to the terminal that the network device does not allow the terminal to use the solution preferred by the terminal, thereby reducing the signaling interaction between the terminal and the network device.

In some embodiments, after the terminal determines that the network device allows the terminal to use the solution preferred by the terminal, the terminal may use the solution preferred by the terminal when different measurement gaps collide with each other.

In some embodiments, after the terminal determines that the network device does not allow the terminal to use the solution preferred by the terminal, the terminal resends the first message to the network device.

In some implementations, after the terminal determines that the network device does not allow the terminal to use the solution preferred by the terminal, a second timer expires, and the terminal resends the first message to the network device. The second timer is started or restarted when the terminal sends the first message to the network device.

In the above embodiments, the terminal expects to use the solution preferred by the terminal. If the terminal reports the solution preferred by the terminal to the network device, but the network device does not allow the terminal to use the solution, the terminal may re-report the solution preferred by the terminal to the network device.

In some embodiments, after the terminal determines that the network device does not allow the terminal to use the solution preferred by the terminal, the terminal uses a solution different from the solution preferred by the terminal.

In the above embodiments, if the terminal reports the solution preferred by the terminal to the network device but the network device does not allow the terminal to use the solution, the terminal may default to using another solution that is different from the solution preferred by the terminal re-reporting. In other words, the network device determines the solution that the terminal may use when the collision occurs between different measurement gaps, thereby ensuring the communication performance of the current network corresponding to the network device as much as possible.

In some embodiments, after a terminal determines that the network device does not allow the terminal to use the solution preferred by the terminal, the terminal uses the solution preferred by the terminal, or uses the solution different from the solution preferred by the terminal.

In the above embodiments, when the network device does not allow the terminal to use the solution preferred by the terminal, the terminal may select which solution to use on its own. That is, the protocol does not require the act of the terminal at this time, thereby ensuring that the terminal may use the solution preferred by the terminal when the collision occurs between different measurement gaps, and improving the terminal's flexibility in solving collisions between different measurement gaps.

The communication method involved in embodiments of the present disclosure may include at least one of steps S201 to S203. For example, step S201 may be implemented as an independent embodiment, step S202 may be implemented as an independent embodiment, step S203 may be implemented as an independent embodiment, step S201+S202 may be implemented as an independent embodiment, and step S202+S203 may be implemented as an independent embodiment, which is not limited in the present disclosure.

In some embodiments, steps S201, S202, and S203 may be performed in an interchangeable order or simultaneously.

In some embodiments, step S201 is optional, and one or more of these steps may be omitted or substituted in different embodiments.

In some embodiments, step S202 is optional, and one or more of these steps may be omitted or substituted in different embodiments.

In some embodiments, step S203 is optional, and one or more of these steps may be omitted or substituted in different embodiments.

In some embodiments, reference may be made to other embodiments described before or after the description corresponding to Fig. 2.

In some embodiments, a MUSIM terminal supports multiple card slots and may connect to multiple networks. In a 3rd Generation Partnership Project (3GPP), the MUSIM terminal may support multiple networks (NWs) simultaneously, such as simultaneously supporting network A (NW A) and network B (NW B). In an implementation, NW A may be a New Radio (NR) network, and NW B may be an NR network or a Long Term Evolution (LTE) network.

It should be noted that the MUSIM terminal involved in the present disclosure may also be described as a terminal that supports a MUSIM capability, a multi-SIM terminal, etc., which is not limited in the present disclosure.

In 3GPP, a measurement gap (MUSIM gap) is introduced for MUSIM measurement to enable the measurement of NW B. In some embodiments, a collision may occur between different measurement gaps. In an implementation, a collision may exist between different MUSIM gaps. In another implementation, a conflict may exist between a MUSIM gap and a measurement gap (MG) used for NWA measurement.

The collision between different measurement gaps refers to a time domain collision between different measurement gaps. For example, measurement gap occasions of different measurement gaps may overlap with each other in the time domain, or a time domain distance between measurement gap occasions of different measurement gaps may be less than or equal to a threshold, such as 4 ms.

In some embodiments, in addition to the MUSIM gap, the measurement gap involved in the present disclosure may also include, but is not limited to: a general measurement gap (legacy MG), a network-controlled small gap (NCSG), a concurrent measurement gap (concurrent MG), a pre-configured measurement gap (pre-config MG), etc.

Several solutions for the measurement gap collision have been defined. Each solution defines when a collision occurs between different measurement gaps, how to perform measurement corresponding to the colliding measurement gaps. However, some technical issues still exist.

In a first aspect, embodiments of the present disclosure provide a method for solving a measurement gap collision. Fig. 3 is a schematic flowchart illustrating a method for solving a measurement gap collision according to an embodiment of the present disclosure. The method for solving a measurement gap collision as shown in the embodiment may be executed by a terminal.

As shown in Figure 3, the method for solving a measurement gap collision may include the following steps.

In step S301, a first message is sent to the network device, where the first message indicates a solution preferred by the terminal for the measurement gap collision.

In some embodiments, the first message may include a UE Assistance Information (UAI) message.

In some embodiments, the first message may include first information, where the first information may indicate the solution preferred by the terminal for the measurement gap collision.

In an implementation, the first information may be solution preference information carried in the UAI message. The solution preference information may indicate at least one solution preferred by the terminal among a predefined plurality of solutions.

For example, the terminal may send the UAI message to the network device, where the solution preference information contained in the UAI message may be "solution#1", which indicates to the network device the solution preferred by the terminal for measurement gap collision is solution#1.

It should be noted that the solution preferred by the terminal involved in the present disclosure refers to for solutions predefined for at least one measurement gap collision and the terminal knows which are the predefined solutions, in this case, the terminal may report to the network device which solution the terminal expects to use to solve the measurement gap collision when the collision occurs in different measurement gaps. Therefore, the solution preferred by the terminal may also be described as the "solution that the terminal expects to use".

It should be noted that the embodiment shown in Fig. 3 may be implemented independently or in combination with at least one other embodiment in the present disclosure. The specific choice may be made as needed, which is not limited in the present disclosure.

In some embodiments, the terminal may be a terminal that supports a MUSIM capability, and the network device may correspond to a first network, such as NW A.

In some embodiments, the solution preference information may be the musim-GapCollisionSolutionPreference field carried in the UAI message. The solution preference information may be a newly defined field or may be obtained by extension of an existing field.

In an implementation, the first information may be used to directly indicate the solution preferred by the terminal for measurement gap collision. For example, the predefined solutions may include solution#1, solution#2, solution#3, etc., and the musim-GapCollisionSolutionPreference field carried in the UAI message sent by the terminal to the network device may be set to "solution#1", to directly indicate to the network device that the terminal prefers solution#1.

In another implementation, the first information may be used to indirectly indicate the solution preferred by the terminal for measurement gap collision. For example, the predefined multiple solutions may include solution#1 and solution#2, and the musim-GapCollisionSolutionPreference field carried in the UAI message sent by the terminal to the network device may be set to "0" to indirectly indicate to the network device that the terminal's preferred solution is solution#1; or the musim-GapCollisionSolutionPreference field carried in the UAI message sent by the terminal to the network device may be set to "1" to indirectly indicate to the network device that the terminal's preferred solution is solution#2.

In the implementations shown above, if more than two solutions are predefined, the number of bits occupied by the musim-GapCollisionSolutionPreference field carried in the UAI message may be increased to indirectly indicate the terminal's preferred solution to the network device, which is not described in details here.

In an implementation, the network device may receive the first message sent by the terminal. The network device may determine the terminal's preferred solution based on the first message. For example, the network device may receive a UAI message sent by the terminal. The UAI message includes solution preference information "solution#1", and the network device may determine that the terminal prefers solution#1.

According to embodiments of the present disclosure, the terminal may send the first message to the network device, where the first message indicates the solution preferred by the terminal for the measurement gap collision. Accordingly, when multiple solutions for the measurement gap collision are defined, the terminal may indicate the solution preferred by the terminal to the network device via the first message, so that the network device may know the terminal's preferred solution. Then, the network device may determine, in combination with the solution preferred by the terminal, the measurement gap configuration information for the terminal, thereby improving the terminal's flexibility in solving collisions between different measurement gaps.

In some embodiments, the solution may include at least one of: a first solution or a second solution. The first solution is that the terminal keeps all colliding measurement gaps; the second solution is that the terminal performs measurement according to priority information of colliding measurement gaps.

It should be noted that the first solution involved in the present disclosure may also be described as a keep solution, and the second solution involved in the present disclosure may also be described as a priority-based solution.

In an implementation, the MUSIM terminal may have different transmit and receive capabilities. For a MUSIM terminal with single TX/single RX or single TX/double RX, since the MUSIM terminal only support a 1TX capability, the MUSIM terminal may not maintain connections to both NW A and NW B simultaneously. For example, a first network is NW A, and a second network is NW B. The terminal is in an RRC-Connected state under NW A, and in an RRC-Idle state or RRC-Inactive state under NW B.

In this case, if a MUSIM gap used for NW B measurement collides with an MG used for NW A measurement, the terminal may be required to perform measurement corresponding to respective measurement gaps of different priorities according to priority information of the colliding measurement gaps. For example, when the collision exists between the MUSIM gap and the MG, the measurement corresponding to the MUSIM gap and/or the MG may be performed in an order of priority of each measurement gap from high to low. During Measurement Gap Length (MGL) of the MG used for the NWA measurement, the terminal interrupts the connection with a serving cell currently accessed under NWA and does not send or receive data. Instead, the terminal modulates from a serving cell frequency to a target cell frequency to perform measurement of a target cell. When the MGL ends or before the MGL ends, the terminal modulates back to the serving cell frequency and continues to send and receive data. During MGL of the MUSIM gap used for the NW B measurement, the terminal interrupts the connection with NW A and performs measurement of a target cell under NW B.

In the above embodiments, the priority information may be configured by the network device for the terminal, which is not limited by the present disclosure. In an implementation, the terminal may indicate its preference for the priorities of the measurement gaps to the network device. The priority information may be configured by the network device for the terminal in combination with the priorities of the measurement gaps preferred by the terminal. The priority information configured by the network device for the terminal and the priorities of the measurement gaps preferred by the terminal may be the same or different. This is not limited in the present disclosure.

Similarly, since the network device may configure one or more MUSIM gaps for the NW B measurement for the terminal, for example, the network device may configure three periodic MUSIM gaps and one non-periodic MUSIM gap for the terminal. Therefore, if the multiple MUSIM gaps used for the NW B measurement collide with each other, the terminal may need to perform measurement corresponding to respective measurement gaps with different priorities according to the priority information of the colliding measurement gaps. For example, when two or more MUSIM gaps collide with each other, the measurement corresponding to the MUSIM gap with the highest priority may be performed in an order of priorities of respective MUSIM gaps from high to low.

In another implementation, the MUSIM terminal may request the use of the keep solution for non-periodic MUSIM gaps and/or non-periodic MUSIM gaps. That is, when the multiple MUSIM gaps used for the NW B measurement collide with each other, the terminal may keep all colliding MUSIM gaps and perform measurement corresponding to all MUSIM gaps, regardless of the priority of each MUSIM gap.

In the above embodiments, the description is presented by taking the predefined multiple solution including the first solution and the second solution as an example in the present disclosure. When two or more solutions are predefined, or when other solutions besides the first solution and the second solution are predefined, the terminal may also indicate to the network device that the terminal prefers other solutions, which is not limited in the present disclosure.

In an implementation, the network device may send a second message to the terminal, where the second message indicates allowing the terminal to report the solution preferred by the terminal for the measurement gap collision.

In some embodiments, the second message may include a Radio Resource Control (RRC) message. For example, the second message may be an RRC Reconfiguration message.

In some embodiments, the second message may include second information, where the second information may indicate allowing the terminal to report the solution preferred by the terminal for the measurement gap collision.

In an implementation, the second information may be measurement gap collision assistance configuration information carried in an RRC reconfiguration message, where the measurement gap collision assistance configuration information may indicate that the network device allows the terminal to report the preferred solution for the measurement gap collision.

In an implementation, the measurement gap collision assistance configuration information may be a musim-GapCollisionAssistanceConfig field carried in the RRC Reconfiguration message. The measurement gap collision assistance configuration information may be a newly defined field or may be obtained by an extension of an existing field.

In some embodiments, prior to step S301, the method may further include: receiving a second message sent by the network device, where the second message indicates allowing the terminal to report a preferred solution for the measurement gap collision.

For example, the terminal may receive an RRCReconfiguration message sent by the network device, where a musim-GapCollisionAssistanceConfig field contained in the RRCReconfiguration message may indicate that the network device allows the terminal to report the preferred solution for the measurement gap collision; further, the terminal may send a UAI message to the network device, where solution preference information contained in the UAI message may be "solution#1", which indicates to the network device that the solution preferred by the terminal is solution#1.

In some embodiments, if the terminal receives the second message from the network device, where the second message includes an indication that the terminal is not allowed to report the preferred solution for the measurement gap collision, or if the terminal does not receive an indication from the network device that allows the terminal to report the preferred solution for the measurement gap collision (i.e., the second message), then the terminal is not expected to send the first message to the network device, or the terminal may send the first message to the network device and the network device will not process the first message.

In the above embodiments, the terminal may receive the second message sent by the network device, which may be used to indicate that the network device allows the terminal to report the preferred solution for the measurement gap collision. Accordingly, when multiple solutions for the measurement gap collision are defined, the network device may allow the terminal to report the terminal's preferred solution for the measurement gap collision. Then, the terminal may indicate the solution preferred by the terminal to the network device via the first message, so that the network device may determine, in combination with the solution preferred by the terminal, the measurement gap configuration information for the terminal, thereby improving the accuracy of the network device in configuring the measurement gap configuration information for the terminal.

In an implementation, the network device may indicate to the terminal whether the terminal is allowed (or granted) to use the solution preferred by the terminal.

In some embodiments, after step S301, the method may further include: determining, based on the indication from the network device, whether the network device allows the terminal to use the solution preferred by the terminal.

For example, the terminal may send the UAI message to the network device, where the solution preference information contained in the UAI message may be "solution#1", which indicates to the network device that the terminal prefers solution#1; further, the terminal may determine, based on the network device's indication, the network device allows the terminal to use solution#1 preferred by the terminal, or the network device does not allow the terminal to use solution#1 preferred by the terminal.

In the above embodiments, from a perspective of the terminal, defining multiple solutions such as the first solution and the second solution may improve the flexibility of implementation. However, since the MUSIM gap is used for the NW B measurement, the first solution (i.e., the keep solution) may increase "interruption" on NW A, which may not always be acceptable for NW A. Therefore, after the terminal indicates its preference for the first solution to the network device, the network device corresponding to NW A may not allow the terminal to use the first solution preferred by the terminal.

In a further embodiment, a manner in which the network device indicates whether the terminal is allowed to use the solution preferred by the terminal includes at least one of: an explicit indication; or an implicit indication.

In some implementations, the network device may explicitly indicate whether the terminal is allowed to use the solution preferred by the terminal.

In this case, determining whether the network device allows the terminal to use the solution preferred by the terminal according to the indication from the network device includes: receiving a third message sent by the network device, where the third message includes third information indicating whether the terminal is allowed to use the solution preferred by the terminal; determining that the network device allows the terminal to use the solution preferred by the terminal according to the third information indicating that the terminal is allowed to use the solution preferred by the terminal; or determining that the network device does not allow the terminal to use the solution preferred by the terminal according to the third information indicating that the terminal is not allowed to use the solution preferred by the terminal.

The third message may include an RRC message. For example, the third message may be an RRC Reconfiguration message. The third information may be solution grant information carried in the RRC reconfiguration message, where the solution grant information may indicate whether the network device allows the terminal to use at least one solution. The solution grant information may be a newly defined field or may be obtained by an extension of an existing field.

For example, the terminal may receive the RRCReconfiguration message sent by the network device, where the RRCReconfiguration message may contain any of the following solution grant information:
configuredGrantKeep-r18ENUMERATED{true/false}; or
configuredGrantKeep-r18BOOLEAN;

That is, an ENUMERATED type information element (IE) may indicate whether the network device allows the terminal to use the first solution preferred by the terminal, where "true" may indicate that the network device allows the terminal to use the first solution preferred by the terminal, and "false" may indicate that the network device does not allow the terminal to use the first solution preferred by the terminal. Alternatively, a Boolean type IE may indicate whether the network device allows the terminal to use the first solution preferred by the terminal, where one of "0" and "1" may indicate that the network device allows the terminal to use the first solution preferred by the terminal, and the other of "0" and "1" may indicate that the network device does not allow the terminal to the first solution preferred by the terminal.

In an implementation, the network device may send the third message to the terminal, where the third message includes the third information for indicating whether the terminal is allowed to use the solution preferred by the terminal.

In the above embodiments, the network device may explicitly indicate to the terminal whether the terminal is allowed to use the solution preferred by the terminal via the third information contained in the third message, thereby improving the reliability of the network device's indication.

In some other implementations, the network device may implicitly indicate whether the terminal is allowed to use the solution preferred by the terminal.

In this case, determining whether the network device allows the terminal to use the solution preferred by the terminal according to the indication from the network device includes: receiving a fourth message sent by the network device, where the fourth message includes measurement gap configuration information configured by the network device for the terminal; and determining whether the network device allows the terminal to use the solution preferred by the terminal according to the measurement gap configuration information.

The fourth message may include an RRC message, where the RRC message may carry measurement gap configuration information configured by the network device for the terminal. The measurement gap configuration information may include a measurement gap pattern, and the measurement gap pattern may include Measurement Gap Repetition Periodicity (MGRP), Measurement Gap Length (MGL), etc.

For example, the terminal may send a UAI message to the network device, where solution preference information contained in the UAI message may be "solution#1", and indicates to the network device that the solution preferred by the terminal is solution#1; further, the terminal may receive an RRCReconfiguration message sent by the network device, where the RRCReconfiguration message may contain an IE of the measurement gap configuration information "musim-GapConfig" indicating the measurement gap configuration information configured by the network device for the terminal; and according to the received measurement gap configuration information, the terminal may determine that the network device allows the terminal to use solution#1 preferred by the terminal.

In an implementation, the network device may send the fourth message to the terminal, where the fourth message includes the measurement gap configuration information configured by the network device for the terminal, and the measurement gap configuration information is used by the terminal to determine whether the network device allows the terminal to use the solution preferred by the terminal.

In the above embodiments, since the network device only sends the measurement gap configuration information configured for the terminal when the terminal is allowed to use the solution preferred by the terminal, the network device may implicitly indicate to the terminal that the terminal is allowed to use the solution preferred by the terminal via the measurement gap configuration information contained in the fourth message, thereby reducing the signaling interaction between the terminal and the network device.

Alternatively, the terminal may be configured with a first timer, where determining whether the network device allows the terminal to use the solution preferred by the terminal according to the indication from the network device includes: the first timer expires, and determining that the network device does not allow the terminal to use the solution preferred by the terminal, where the first timer is started or restarted when the terminal sends the first message to the network device. That is, the first timer is used to record a time passing through after the terminal reports the solution preferred by the terminal to the network device.

For example, the terminal may send a UAI message to the network device and start or restart the first timer, where solution preference information contained in the UAI message may be "solution#1", which indicates to the network device that the solution preferred by the terminal is solution#1. Furthermore, when the first timer expires, the terminal may determine that the network device does not allow the terminal to use solution#1 preferred by the terminal.

In an implementation, the network device determines that the terminal is not allowed to use the solution preferred by the terminal, and the network device is not expected to send the third message or the fourth message to the terminal.

In the above embodiments, since in a case that the network device allows the terminal to use the solution preferred by the terminal, the network device will indicate to the terminal whether the network device allows the terminal to use the solution preferred by the terminal, or will send the measurement gap configuration information, that is configured for the terminal, to the terminal, the terminal may be configured with the first timer. If the first timer expires and the terminal does not receive the third information or the measurement gap configuration information sent by the network device, it may be determined that the network device implicitly indicates to the terminal that the network device does not allow the terminal to use the solution preferred by the terminal, thereby reducing the signaling interaction between the terminal and the network device.

In some embodiments, the method may further include: after determining that the network device allows the terminal to use the solution preferred by the terminal, using the solution preferred by the terminal when different measurement gaps collide with each other.

For example, a terminal may send a UAI message to a network device, where the solution preference information contained in the UAI message may be "solution#1", which indicates to the network device that the terminal prefers solution#1; further, according to the indication from the network device, the terminal may determine that the network device allows the terminal to use solution#1 preferred by the terminal; when a collision occurs between different measurement gaps, the terminal may use solution#1 preferred by the terminal.

In some embodiments, the method may further include: after determining that the network device does not allow the terminal to use the solution preferred by the terminal, resending the first message to the network device.

For example, the terminal may send a UAI message to the network device, where solution preference information contained in the UAI message may be "solution#1", which indicates to the network device that the solution preferred by the terminal is solution#1; further, according to the indication from the network device, the terminal may determine that the network device does not allow the terminal to use solution#1 preferred by the terminal; further, the terminal may resend the UAI message to the network device, where the solution preference information contained in the UAI message may be "solution#1".

In an implementation, the network device receives the first message resent by the terminal.

In the above embodiments, if the terminal may use the solution only when the network device allows the terminal to use the solution preferred by the terminal, that is, the terminal may only use the terminal's preferred solution after being granted by the network device, then when the network device does not allow the terminal to use the solution preferred by the terminal, the terminal may resend the first message to the network device to re-indicate the solution preferred by the terminal until the network device allows the terminal to use the solution preferred by the terminal, or until the number of times that the terminal resends the first message to the network device reaches a threshold, thereby ensuring that the terminal may use the solution preferred by the terminal when different measurement gaps collide with each other.

In some implementations, the terminal may be configured with a second timer; resending the first message to the network device includes: the second timer expires, and resending the first message to the network device, where the second timer is started or restarted when the terminal sends the first message to the network device. That is, the second timer is used to record a time passing through after the terminal reports the solution preferred by the terminal to the network device.

For example, the terminal may send a UAI message to the network device and start or restart a second timer, and solution preference information contained in the UAI message may be "solution#1", which indicates to the network device that the solution preferred by the terminal is solution#1. Further, according to the indication from the network device, the terminal may determine that the network device does not allow the terminal to use solution#1 preferred by the terminal. Further, if the second timer expires, the terminal may resend the UAI message to the network device.

In the above embodiments, when the network device does not allow the terminal to use the solution preferred by the terminal, the terminal may resend the first message to the network device to indicate the solution preferred by the terminal. Furthermore, by configuring the second timer for the terminal (e.g., a prohibit timer), it may avoid the terminal's frequent reporting of the first message to the network device, which helps to save terminal power consumption and also avoids increasing network load.

It should be noted that the first timer and the second timer involved in the present disclosure may be the same timer or different timers, which is not specifically limited in the present disclosure.

In some embodiments, the method may further include: after determining that the network device does not allow the terminal to use the solution preferred by the terminal, using a solution different from the solution preferred by the terminal. Here, the solution different from the solution preferred by the terminal refers to a solution other than the solution preferred by the terminal and reported by the terminal to the network device among a predefined set of solutions. Therefore, the solution different from the solution preferred by the terminal involved in the present disclosure may also be described as a "solution not preferred by the terminal".

For example, the terminal may send a UAI message to a network device, where solution preference information contained in the UAI message may be "solution#1", which indicates to the network device that the solution preferred by the terminal is solution#1; further, according to the indication from the network device, the terminal may determine that the network device does not allow the terminal to use solution#1 preferred by the terminal; further, when the collision occurs between different measurement gaps, the terminal may use solution#2 that is different from solution#1 preferred by the terminal.

In an implementation, the network device indicates to the terminal that the terminal is not allowed to use the solution preferred by the terminal; the network device expects the terminal to use a solution different from the solution preferred by the terminal. The solution that the network device expects the terminal to use may be indicated by the network device to the terminal, or may be determined by the terminal itself according to a predefined rule. For example, network devices may use an RRC message to indicate to the terminal the solution that the network device expects the terminal to use. For example, after the terminal determines that the network device does not allow the terminal to use the solution preferred by the terminal, the terminal may use a default solution; or the terminal may determine the solution to be used among predefined solutions other than the terminal's preferred solution according to the predefined rule. The predefined rule may be negotiated in advance between the terminal and the network device or agreed upon by an agreement, which is not specifically limited in the present disclosure.

In the above embodiments, the network device determines the solution that the terminal may use when the collision occurs between different measurement gaps, thereby ensuring the communication performance of the current network corresponding to the network device as much as possible.

In some embodiments, the method may further include: after determining that the network device does not allow the terminal to use the solution preferred by the terminal, using the solution preferred by the terminal, or using a solution different from the solution preferred by the terminal.

For example, the terminal may send a UAI message to the network device, where solution preference information contained in the UAI message may be "solution#1", which indicates to the network device that the solution preferred by the terminal is solution#1; further, according to the indication from the network device, the terminal may determine that the network device does not allow the terminal to use solution#1 preferred by the terminal; further, when the collision occurs between different measurement gaps, the terminal may use solution#1 preferred by the terminal, or the terminal may use another solution#2.

In the above embodiments, when the network device does not allow the terminal to use the solution preferred by the terminal, the terminal may select which solution to be used on its own. That is, the protocol does not require the act of the terminal in this case, thereby ensuring that the terminal may use the solution preferred by the terminal when the collision occurs between different measurement gaps, and improving the flexibility of the terminal in solving collisions between different measurement gaps.

In a second aspect, embodiments of the present disclosure provide a method for solving a measurement gap collision. Fig. 4 is a schematic flowchart illustrating another method for solving a measurement gap collision according to an embodiment of the present disclosure. The method for solving a measurement gap collision as shown in the embodiment may be performed by a network device.

As shown in Fig. 4, the method for solving the measurement gap collision may include the following steps.

In step S401, a first message sent by a terminal is received, where the first message indicates a solution preferred by the terminal for the measurement gap collision.

In some embodiments, the first message may include a UE Assistance Information (UAI) message.

In some embodiments, the first message may include first information, where the first information may indicate the solution preferred by the terminal for the measurement gap collision.

In an implementation, the first information may be solution preference information carried in the UAI message. The solution preference information may indicate at least one solution preferred by the terminal among a predefined plurality of solutions.

For example, the network device may receive the UAI message sent by the terminal, where the solution preference information contained in the UAI message may be "solution#1", which indicates the solution preferred by the terminal for the measurement gap collision is solution#1.

It should be noted that the embodiment shown in Fig. 4 may be implemented independently or in combination with at least one other embodiment in the present disclosure. The specific choice may be made as needed, which is not limited in the present disclosure.

In some embodiments, the terminal may be a terminal that supports a MUSIM capability, and the network device may correspond to a first network, such as NW A.

In some embodiments, the solution preference information may be the musim-GapCollisionSolutionPreference field carried in the UAI message. The solution preference information may be a newly defined field or may be obtained by extension of an existing field.

In an implementation, the first information may be used to directly indicate the solution preferred by the terminal for measurement gap collision. For example, the predefined solutions may include solution#1, solution#2, solution#3, etc., and the musim-GapCollisionSolutionPreference field carried in the UAI message sent by the terminal to the network device may be set to "solution#1", to directly indicate to the network device that the terminal prefers solution#1.

In another implementation, the first information may be used to indirectly indicate the solution preferred by the terminal for measurement gap collision. For example, the predefined multiple solutions may include solution#1 and solution#2, and the musim-GapCollisionSolutionPreference field carried in the UAI message sent by the terminal to the network device may be set to "0" to indirectly indicate to the network device that the terminal's preferred solution is solution#1; or the musim-GapCollisionSolutionPreference field carried in the UAI message sent by the terminal to the network device may be set to "1" to indirectly indicate to the network device that the terminal's preferred solution is solution#2.

In the implementation methods shown above, if more than two solutions are predefined, the number of bits occupied by the musim-GapCollisionSolutionPreference field carried in the UAI message may be increased to indirectly indicate the terminal's preferred solution to the network device, which is not described in details here.

In an implementation, the terminal may send the first message to the network device, where the first message indicates the solution preferred by the terminal for the measurement gap collision.

According to embodiments of the present disclosure, the network device may receive the first message sent by the terminal, where the first message indicates the solution preferred by the terminal for the measurement gap collision. Accordingly, when multiple solutions for the measurement gap collision are defined, the terminal may indicate the solution preferred by the terminal to the network device via the first message, so that the network device may know the terminal's preferred solution. Then, the network device may determine, in combination with the solution preferred by the terminal, the measurement gap configuration information for the terminal, thereby improving the terminal's flexibility in solving collisions between different measurement gaps.

In some embodiments, the solution may include at least one of a first solution or a second solution. The first solution is that the terminal keeps all colliding measurement gaps; the second solution is that the terminal performs measurement according to priority information of colliding measurement gaps

It should be noted that the first solution involved in the present disclosure may also be described as a keep solution, and the second solution involved in the present disclosure may also be described as a priority-based solution.

In an implementation, the MUSIM terminal may have different transmit and receive capabilities. For a MUSIM terminal with single TX/single RX or single TX/double RX, since the MUSIM terminal only support a 1TX capability, the MUSIM terminal may not maintain connections to both NW A and NW B simultaneously. For example, a first network is NW A, and a second network is NW B. The terminal is in an RRC-Connected state under NW A, and in an RRC-Idle state or RRC-Inactive state under NW B.

In this case, if a MUSIM gap used for NW B measurement collides with an MG used for NW A measurement, the terminal may be required to perform measurement corresponding to respective measurement gaps of different priorities according to priority information of the colliding measurement gaps. For example, when the collision exists between the MUSIM gap and the MG, the measurement corresponding to the MUSIM gap and/or the MG may be performed in an order of priority of each measurement gap from high to low. During Measurement Gap Length (MGL) of the MG used for the NWA measurement, the terminal interrupts the connection with a serving cell currently accessed under NWA and does not send or receive data. Instead, the terminal modulates from a serving cell frequency to a target cell frequency to perform measurement of a target cell. When the MGL ends or before the MGL ends, the terminal modulates back to the serving cell frequency and continues to send and receive data. During MGL of the MUSIM gap used for the NW B measurement, the terminal interrupts the connection with NW A and performs measurement of a target cell under NW B.

In the above embodiments, the priority information may be configured by the network device for the terminal, which is not limited by the present disclosure. In an implementation, the terminal may indicate its preference for the priorities of the measurement gaps to the network device. The priority information may be configured by the network device for the terminal in combination with the priorities of the measurement gaps preferred by the terminal. The priority information configured by the network device for the terminal and the priorities of the measurement gaps preferred by the terminal may be the same or different. This is not limited in the present disclosure.

Similarly, since the network device may configure one or more MUSIM gaps for the NW B measurement for the terminal, for example, the network device may configure three periodic MUSIM gaps and one non-periodic MUSIM gap for the terminal. Therefore, if the multiple MUSIM gaps used for the NW B measurement collide with each other, the terminal may need to perform measurement corresponding to respective measurement gaps with different priorities according to the priority information of the colliding measurement gaps. For example, when two or more MUSIM gaps collide with each other, the measurement corresponding to the MUSIM gap with the highest priority may be performed in an order of priorities of respective MUSIM gaps from high to low.

In another implementation, the MUSIM terminal may request the use of the keep solution for non-periodic MUSIM gaps and/or non-periodic MUSIM gaps. That is, when the multiple MUSIM gaps used for the NW B measurement collide with each other, the terminal may keep all colliding MUSIM gaps and perform measurement corresponding to all MUSIM gaps, regardless of the priority of each MUSIM gap

In the above embodiments, the description is presented by taking the predefined multiple solution including the first solution and the second solution as an example in the present disclosure. When two or more solutions are predefined, or when other solutions besides the first solution and the second solution are predefined, the terminal may also indicate to the network device that the terminal prefers other solutions, which is not limited in the present disclosure.

In some embodiments, the method may further include: sending a second message to the terminal, where the second message indicates allowing the terminal to report the solution preferred by the terminal for the measurement gap collision.

In some embodiments, the second message may include a Radio Resource Control (RRC) message. For example, the second message may be an RRC Reconfiguration message.

In some embodiments, the second message may include second information, where the second information may indicate allowing the terminal to report the solution preferred by the terminal for the measurement gap collision.

In an implementation, the second information may be measurement gap collision assistance configuration information carried in an RRC reconfiguration message, where the measurement gap collision assistance configuration information may indicate that the network device allows the terminal to report the preferred solution for the measurement gap collision.

In an implementation, the measurement gap collision assistance configuration information may be a musim-GapCollisionAssistanceConfig field carried in the RRC Reconfiguration message. The measurement gap collision assistance configuration information may be a newly defined field or may be obtained by an extension of an existing field.

For example, the network device may send an RRCReconfiguration message to a terminal, where a musim-GapCollisionAssistanceConfig field contained in the RRCReconfiguration message may indicate that the network device allows the terminal to report the preferred solution for the measurement gap collision; further, the terminal may send a UAI message to the network device, where solution preference information contained in the UAI message may be "solution#1", which indicates to the network device that the solution preferred by the terminal is solution#1.

In an implementation, the terminal may receive the second message sent by the network device.

In some embodiments, if the network device sends the second message to the terminal, where the second message includes an indication that the terminal is not allowed to report the preferred solution for the measurement gap collision, or the network device is not expected to send the indication that the terminal is not allowed to report the preferred solution for the measurement gap collision (i.e., the second message) to the terminal, then the terminal is not expected to send the first message to the network device, or the terminal may send the first message to the network device and the network device will not process the first message.

In the above embodiments, the network device may send the second message to the terminal, which may be used to indicate that the network device allows the terminal to report the preferred solution for the measurement gap collision. Accordingly, when multiple solutions for the measurement gap collision are defined, the network device may allow the terminal to report the terminal's preferred solution for the measurement gap collision. Then, the terminal may indicate the solution preferred by the terminal to the network device via the first message, so that the network device may determine, in combination with the solution preferred by the terminal, the measurement gap configuration information for the terminal, thereby improving the accuracy of the network device in configuring the measurement gap configuration information for the terminal.

In some embodiments, the method may further include: indicating to the terminal whether the terminal is allowed to use the solution preferred by the terminal.

For example, the network device may receive a UAI message sent by the terminal, where the solution preference information contained in the UAI message may be "solution#1", which indicates to the network device that the terminal prefers solution#1; further, the network device may indicate to the terminal that the terminal is allowed to use solution#1 preferred by the terminal, or the network device may indicate to the terminal that the terminal is not allowed to use solution#1 preferred by the terminal.

In the above embodiments, from a perspective of the terminal, defining multiple solutions such as the first solution and the second solution may improve the flexibility of implementation. However, since the MUSIM gap is used for NW B measurement, the first solution (i.e., the keep solution) may increase "interruption" on NW A, which may not always be acceptable for NW A. Therefore, after the terminal indicates its preference for the first solution to the network device, the network device corresponding to NW A may not allow the terminal to use the first solution preferred by the terminal.

In some embodiments, a manner in which the network device indicates whether the terminal is allowed to use the solution preferred by the terminal includes at least one of: an explicit indication; or an implicit indication.

In some implementations, the network device may explicitly indicate whether the terminal is allowed to use the solution preferred by the terminal.

In this case, indicating to the terminal whether the terminal is allowed to use the solution preferred by the terminal includes: sending a third message to the terminal, where the third message includes third information, where the third information indicates whether the terminal is allowed to use the solution preferred by the terminal.

The third message may include an RRC message. For example, the third message may be an RRC Reconfiguration message. The third information may be solution grant information carried in the RRC reconfiguration message, where the solution grant information may indicate whether the network device allows the terminal to use at least one solution. The solution grant information may be a newly defined field or may be obtained by an extension of an existing field.

For example, the network device may send the RRCReconfiguration message to the terminal, where the RRCReconfiguration message may contain any of the following solution grant information:
configuredGrantKeep-r18 ENUMERATED{true/false}; or
configuredGrantKeep-r18 BOOLEAN;

That is, an ENUMERATED type IE may indicate whether the network device allows the terminal to use the first solution preferred by the terminal, where "true" may indicate that the network device allows the terminal to use the first solution preferred by the terminal, and "false" may indicate that the network device does not allow the terminal to use the first solution preferred by the terminal. Alternatively, a Boolean type IE may indicate whether the network device allows the terminal to use the first solution preferred by the terminal, where one of "0" and "1" may indicate that the network device allows the terminal to use the first solution preferred by the terminal, and the other of "0" and "1" may indicate that the network device does not allow the terminal to the first solution preferred by the terminal.

In an implementation, the terminal may receive a third message sent by the network device; and the terminal may determine that the network device allows the terminal to use the solution preferred by the terminal according to the third information indicating that the terminal is allowed to use the solution preferred by the terminal; or the terminal may determine that the network device does not allow the terminal to use the solution preferred by the terminal according to the third information indicating that the terminal is not allowed to use the solution preferred by the terminal.

In the above embodiments, the network device may explicitly indicate to the terminal whether the terminal is allowed to use the solution preferred by the terminal via the third information contained in the third message, thereby improving the reliability of the network device's indication.

In some other implementations, the network device may implicitly indicate whether the terminal is allowed to use the solution preferred by the terminal.

In this case, indicating to the terminal whether the terminal is allowed to use the solution preferred by the terminal includes: sending a fourth message to the terminal, where the fourth message includes measurement gap configuration information configured by the network device for the terminal, and the measurement gap configuration information is used by the terminal to determine whether the network device allows the terminal to use the solution preferred by the terminal.

The fourth message may include an RRC message, where the RRC message may carry measurement gap configuration information configured by the network device for the terminal. The measurement gap configuration information may include a measurement gap pattern, and the measurement gap pattern may include Measurement Gap Repetition Periodicity (MGRP), Measurement Gap Length (MGL), etc.

For example, the network device may receive a UAI message sent by the terminal, where solution preference information contained in the UAI message may be "solution#1", and to the network device that the solution preferred by the terminal is solution#1; further, the network device may send an RRCReconfiguration message to the terminal, where the RRCReconfiguration message may contain an IE of the measurement gap configuration information "musim-GapConfig" indicating the measurement gap configuration information configured by the network device for the terminal, where the measurement gap configuration information is used by the terminal to determine that the network device allows the terminal to use solution#1 preferred by the terminal.

In the above embodiments, since the network device only sends the measurement gap configuration information configured for the terminal when the network device allows the terminal to use the solution preferred by the terminal, the network device may implicitly indicate to the terminal that the terminal is allowed to use the solution preferred by the terminal via the measurement gap configuration information contained in the fourth message, thereby reducing the signaling interaction between the terminal and the network device.

Alternatively, in this case, indicating to the terminal whether the terminal is allowed to use the solution preferred by the terminal includes: determining that the terminal is not allowed to use the solution preferred by the terminal, where the network device is not expected to send the third message or the fourth message to the terminal.

In the above embodiments, since in a case that the network device allows the terminal to use the solution preferred by the terminal, the network device will indicate to the terminal whether the network device allows the terminal to use the solution preferred by the terminal, or will send the measurement gap configuration information, that is configured for the terminal, to the terminal, the terminal may be configured with the first timer. If the first timer expires and the terminal does not receive the third information or the measurement gap configuration information sent by the network device, it may be determined that the network device implicitly indicates to the terminal that the network device does not allow the terminal to use the solution preferred by the terminal, thereby reducing the signaling interaction between the terminal and the network device.

In some embodiments, the network device indicates to the terminal that the terminal is allowed to use the solution preferred by the terminal, where the terminal is expected to use the solution preferred by the terminal.

In some embodiments, the network device indicates to the terminal that the terminal is not allowed to use the solution preferred by the terminal. In this case, the method further includes: receiving the first message resent by the terminal.

For example, the network device may indicate to the terminal that the terminal is not allowed to use solution#1 preferred by the terminal; further, the network device may receive a UAI message resent by the terminal, where solution preference information contained in the UAI message may be "solution #1".

In an implementation, after determining that the network device does not allow the terminal to use the solution preferred by the terminal, the terminal resends the first message to the network device.

In the above embodiments, if the terminal may use the solution only when the network device allows the terminal to use the solution preferred by the terminal, that is, the terminal may only use the terminal's preferred solution after being granted by the network device, then when the network device does not allow the terminal to use the solution preferred by the terminal, the terminal may resend the first message to the network device to re-indicate the solution preferred by the terminal until the network device allows the terminal to use the solution preferred by the terminal, or until the number of times that the terminal resends the first message to the network device reaches a threshold, thereby ensuring that the terminal may use the solution preferred by the terminal when different measurement gaps collide with each other.

In some embodiments, the network device indicates to the terminal that the terminal is not allowed to use the solution preferred by the terminal. In this case, the network device expects the terminal to use a solution that is different from the solution preferred by the terminal.

For example, the network device may indicate to the terminal that the terminal is not allowed to use the solution#1 preferred by the terminal; or the network device may expect the terminal to use solution #2 that is different from solution#1 preferred by the terminal.

In an implementation, after determining that the network device does not allow the terminal to use the solution preferred by the terminal, the terminal may use the solution different from the solution preferred by the terminal.

In the above embodiments, when the network device does not allow the terminal to use the solution preferred by the terminal, the terminal may use another solutions by default. That is, the network device determines the solution that the terminal may use when the collision exists between different measurement gaps, so as to ensure the communication performance of the current network corresponding to the network device as much as possible.

In an implementation, after determining that the network device does not allow the terminal to use the solution preferred by the terminal, the terminal uses the solution preferred by the terminal, or using a solution different from the solution preferred by the terminal.

In the above embodiments, when the network device does not allow the terminal to use the solution preferred by the terminal, the terminal may select which solution to be used on its own. That is, the protocol does not require the act of the terminal in this case, thereby ensuring that the terminal may use the solution preferred by the terminal when the collision occurs between different measurement gaps, and improving the flexibility of the terminal in solving collisions between different measurement gaps.

In some embodiments, the names of information, etc., are not limited to the names described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, terms such as "moment", "timing", "time", and "time location" may be used interchangeably, and terms such as "duration", "segment", "time window", "window", and "time" may be used interchangeably.

In some embodiments, the terms "component carrier (CC)", "cell", "frequency carrier", and "carrier frequency" may be used interchangeably.

In some embodiments, "get", "obtain", "receive", "transmit", "bidirectional transmission", and "send and/or receive" may be used interchangeably and may be interpreted as receiving from other entities, obtaining from protocols, obtaining from higher layers, obtaining through self-processing, or autonomous implementation, among other meanings.

In some embodiments, terms such as "send", "transmit", "report", "distribute", "transmit", "bidirectional transmission", "send and/or receive" may be used interchangeably.

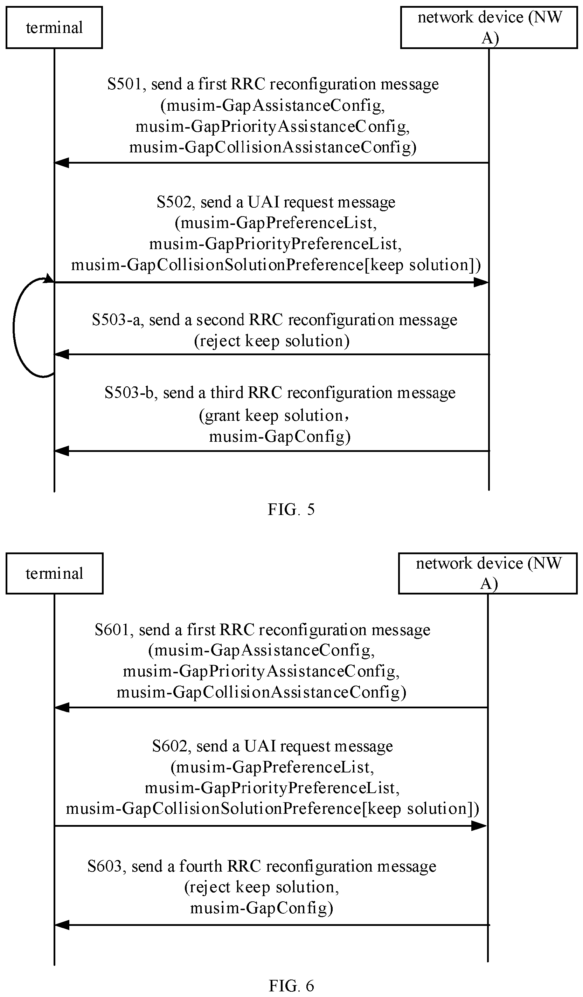

The following description uses the solution preferred by the terminal being a first solution as an example, and describes embodiments of the method as described in the first aspect in conjunction with Fig. 5. Fig. 5 is an interactive schematic diagram illustrating a method for solving a measurement gap collision according to an embodiment of the present disclosure.

As shown in Fig. 5, a network device may correspond to a first network, such as NW A.

In step S501, the network device may send a first RRC reconfiguration message to a terminal.

In some embodiments, the first RRC reconfiguration message may include at least one of: measurement gap assistance configuration information (musim-GapAssistanceConfig), measurement gap priority assistance configuration information (musim-GapPriorityAssistanceConfig), or measurement gap collision assistance configuration information (musim-GapCollisionAssistanceConfig). The measurement gap assistance configuration information may indicate that the network device allows the terminal to report the terminal's preference for a measurement gap mode; the measurement gap priority assistance configuration information may indicate that the network device allows the terminal to report the terminal's preference for a priority of each measurement gap; and the measurement gap collision assistance configuration information may indicate that the network device allows the terminal to report a preferred solution for a measurement gap collision.

In some embodiments, the terminal may receive the first RRC reconfiguration message sent by the network device.

In some embodiments, predefined multiple solutions include a keep solution (i.e., a first solution) and a priority-based solution (i.e., a second solution).

In step S502, the terminal may send a UAI request message to the network device.

In some embodiments, the UAI request message may include at least one of: measurement gap preference information (musim-GapPreferenceList), priority preference information (musim-GapPriorityPreferenceList), or solution preference information (musim-GapCollisionSolutionPreference). The measurement gap preference information may indicate the terminal's preference for the measurement gap mode; the priority preference information may indicate the terminal's preference for the priority of each measurement gap; and the solution preference information may indicate the terminal's preferred solution for the measurement gap collision. For example, the musim-GapCollisionSolutionPreference includes "keep solution", which means the terminal indicates to the network device that the keep solution is preferred.

In step S503-a, the network device may send a second RRC reconfiguration message to the terminal.

For example, the second RRC reconfiguration message sent by the network device to the terminal may indicate "reject keep solution", that is, indicating that the network device does not allow the terminal to use the keep solution preferred by the terminal.

In some embodiments, if the terminal determines that the network device does not allow the terminal to use the keep solution preferred by the terminal, the terminal continues to perform step S502, that is, the terminal resends the UAI request message to the network device.

In step S503-b, the network device may send a third RRC reconfiguration message to the terminal.

For example, the third RRC reconfiguration message sent by the network device to the terminal may indicate "grant keep solution", that is, indicating that the network device allows the terminal to use the keep solution preferred by the terminal. Additionally, the third RRC reconfiguration message may include measurement gap configuration information configured by the network device for the terminal.

It should be noted that in step S503-b, the network device may indicate to the terminal that the terminal is allowed to use the keep solution preferred by the terminal and send the measurement gap configuration information, that is configured for the terminal, to the terminal via one RRC reconfiguration message; or the network device may indicate to the terminal that the terminal is allowed to use the keep solution preferred by the terminal and send the measurement gap configuration information, that is configured for the terminal, to the terminal via two RRC reconfiguration messages respectively. This is not limited in the present disclosure.

In some embodiments, if the terminal determines that the network device allows the terminal to use the keep solution preferred by the terminal, then when a collision occurs between different measurement gaps, the keep solution preferred by the terminal may be used to handle the collision; that is, the colliding measurement gaps may be kept for the terminal.

The following description uses the solution preferred by the terminal being a first solution as an example, and describes embodiments of the method as described in the first aspect in conjunction with Fig. 6. Fig. 6 is an interactive schematic diagram illustrating another method for solving a measurement gap collision according to an embodiment of the present disclosure.

As shown in Fig. 6, a network device may correspond to a first network, such as NW A.

In step S601, the network device may send a first RRC reconfiguration message to a terminal.

In some embodiments, the first RRC reconfiguration message may include at least one of: measurement gap assistance configuration information (musim-GapAssistanceConfig), measurement gap priority assistance configuration information (musim-GapPriorityAssistanceConfig), or measurement gap collision assistance configuration information (musim-GapCollisionAssistanceConfig). The measurement gap assistance configuration information may indicate that the network device allows the terminal to report the terminal's preference for a measurement gap mode; the measurement gap priority assistance configuration information may indicate that the network device allows the terminal to report the terminal's preference for a priority of each measurement gap; and the measurement gap collision assistance configuration information may indicate that the network device allows the terminal to report a preferred solution for a measurement gap collision.

In some embodiments, the terminal may receive the first RRC reconfiguration message sent by the network device.

In some embodiments, predefined multiple solutions include a keep solution (i.e., a first solution) and a priority-based solution (i.e., a second solution).

In step S602, the terminal may send a UAI request message to the network device.

In some embodiments, the UAI request message may include at least one of: measurement gap preference information (musim-GapPreferenceList), priority preference information (musim-GapPriorityPreferenceList), or solution preference information (musim-GapCollisionSolutionPreference). The measurement gap preference information may indicate the terminal's preference for the measurement gap mode; the priority preference information may indicate the terminal's preference for the priority of each measurement gap; and the solution preference information may indicate the terminal's preferred solution for the measurement gap collision. For example, the musim-GapCollisionSolutionPreference includes "keep solution", which means the terminal indicates to the network device that the keep solution is preferred by the terminal.

In step S603, the network device may send a fourth RRC reconfiguration message to the terminal.

For example, the fourth RRC reconfiguration message sent by the network device to the terminal may indicate "reject keep solution", that is, indicating that the network device does not allow the terminal to use the keep solution preferred by the terminal; and the fourth RRC reconfiguration message may include measurement gap configuration information configured by the network device for the terminal.

In some embodiments, if the terminal determines that the network device does not allow the terminal to use the keep solution preferred by the terminal, then when a collision occurs between different measurement gaps, the terminal may default to using a priority-based solution to handle the collision. That is, the terminal may perform measurement according to priority information of the colliding measurement gaps. For example, the terminal may perform measurement corresponding to at least one measurement gap in a descending order of priorities of the respective measurement gaps.

In some other embodiments, if the terminal determines that the network device does not allow the terminal to use the keep solution preferred by the terminal, then when the collision occurs between different measurement gaps, the terminal may use a solution as needed to handle the collision, and the protocol does not require the act of the terminal in this situation.

Corresponding to the aforementioned embodiments of the method for solving a measurement gap collision, the present disclosure also provides embodiments of an apparatus for solving a measurement gap collision.

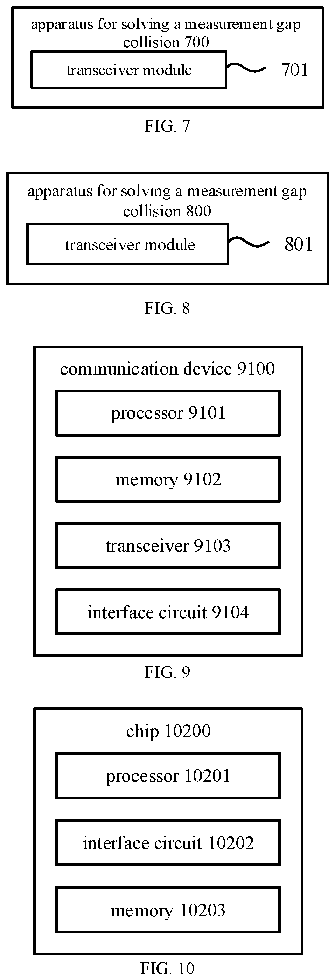

Fig. 7 is a schematic block diagram of an apparatus for solving a measurement gap collision according to an embodiment of the present disclosure. As shown in Fig. 7, the apparatus for solving a measurement gap collision 700 includes a transceiver module 701.

In some embodiments, the transceiver module is configured to send a first message to a network device, where the first message indicates a solution preferred by the terminal for the measurement gap collision.

In some embodiments, the solution includes at least one of:
a first solution, where the first solution is that the terminal keeps all colliding measurement gaps; or
a second solution, where the second solution is that the terminal performs measurement according to priority information of colliding measurement gaps.

In some embodiments, the transceiver module is further configured to receive a second message sent by a network device, where the second message indicates allowing the terminal to report the preferred solution for the measurement gap collision.

In some embodiments, the apparatus further includes:
a processing module, configured to determine whether the network device allows the terminal to use the solution preferred by the terminal according to an indication from the network device.

In some embodiments, a manner in which the network device indicates whether the terminal is allowed to use the solution preferred by the terminal includes at least one of: an explicit indication; or an implicit indication.

In some embodiments, the manner includes the explicit indication, and the processing module includes:
a transceiver submodule, configured to receive a third message sent by the network device, where the third message includes third information, and the third information indicates whether the terminal is allowed to use the solution preferred by the terminal; and
a processing submodule, configured to determine that the network device allows the terminal to use the solution preferred by the terminal according to the third information indicating that the terminal is allowed to use the solution preferred by the terminal; or to determine that the network device does not allow the terminal to use the solution preferred by the terminal according to the third information indicating that the terminal is not allowed to use the solution preferred by the terminal.

In some embodiments, the manner includes the implicit indication, and the processing module includes:
a transceiver submodule, configured to receive a fourth message sent by the network device, where the fourth message includes measurement gap configuration information configured by the network device for the terminal, and determine that the network device allows the terminal to use the solution preferred by the terminal according to the measurement gap configuration information; and
a processing submodule, configured to determine that the network device does not allow the terminal to use the solution preferred by the terminal in response to a first timer expiring, where the first timer is started or restarted when the terminal sends the first message to the network device.

In some embodiments, the transceiver module is further configured to resend the first message to the network device, after determining that the network device does not allow the terminal to use the solution preferred by the terminal.

In some embodiments, the transceiver module is configured to resend the first message to the network device in response to a second timer expiring, where the second timer is started or restarted when the terminal sends the first message to the network device.

In some embodiments, the processing module is configured to use a solution different from the solution preferred by the terminal, after determining that the network device does not allow the terminal to use the solution preferred by the terminal.

In some embodiments, the processing module is configured to use the solution preferred by the terminal, or to use a solution different from the solution preferred by the terminal, after determining that the network device does not allow the terminal to use the solution preferred by the terminal.

It should be noted that the modules included in the apparatus for solving a measurement gap collision 700 are not limited to the modules described in the above embodiments, and may also include other modules, such as a storage module, a display module, etc.

Fig. 8 is a schematic block diagram of another apparatus for solving a measurement gap collision according to an embodiment of the present disclosure. As shown in Fig. 8, the apparatus for solving a measurement gap collision 800 includes a transceiver module 801.

In some embodiments, the transceiver module is configured to receive a first message sent by a terminal, where the first message indicates a solution preferred by the terminal for the measurement gap collision.

In some embodiments, the solution includes at least one of:
a first solution, where the first solution is that the terminal keeps all colliding measurement gaps;
a second solution, where the second solution is that the terminal performs measurement according to priority information of colliding measurement gaps.

In some embodiments, the transceiver module is further configured to send a second message to the terminal, where the second message indicates allowing the terminal to report the preferred solution for the measurement gap collision.

In some embodiments, the apparatus further includes:
a processing module, configured to indicate to the terminal whether the terminal is allowed to use the solution preferred by the terminal.

In some embodiments, a manner of indicating to the terminal whether the terminal is allowed to use the solution preferred by the terminal includes at least one of: an explicit instruction; or an implicit instruction.

In some embodiments, the manner includes the explicit indication, and the processing module includes:
a transceiver submodule, configured to send a third message to the terminal, where the third message includes third information, and the third information indicates whether the terminal is allowed to use the solution preferred by the terminal.

In some embodiments, the manner includes the implicit indication, and the processing module includes:
a transceiver submodule, configured to send a fourth message to the terminal, where the fourth message includes measurement gap configuration information configured by the network device for the terminal, and the measurement gap configuration information is used by the terminal to determine that the network device allows the terminal to use the solution preferred by the terminal; or
a processing submodule, configured to determine not to allow the terminal to use the solution preferred by the terminal, where the network device is not expected to send the third message or the fourth message to the terminal.

In some embodiments, the network device indicates to the terminal that the terminal is not allowed to use the solution preferred by the terminal, and
the transceiver module is further configured to receive the first message resent by the terminal.

In some embodiments, the network device indicates to the terminal that the terminal is not allowed to use the solution preferred by the terminal, and the network device expects the terminal to use a solution different from the solution preferred by the terminal.

It should be noted that the modules included in the apparatus for solving a measurement gap collision 800 are not limited to those described in the above embodiments, and may also include other modules, such as a storage module, a display modules, etc.

For the apparatus embodiments, since they basically correspond to the method embodiments, for the relevant parts, reference may be made to in the description of the method embodiments. The apparatus embodiments described above are merely illustrative. The modules described as separate components may or may not be physically separate. The components shown as modules may or may not be physical modules, i.e., they may be located in one place or distributed across multiple network modules. Some or all of the modules may be selected to achieve the purpose of embodiments according to actual needs. This may be understood and implemented by those skilled in the art without any creative effort.

Embodiments of the present disclosure also provide a terminal. The terminal includes one or more processors. The processors are configured to invoke instructions to cause the terminal to perform the method for solving a measurement gap collision as described in the first aspect and embodiments of the first aspect.

Embodiments of the present disclosure also provide a network device. The network device includes one or more processors. The processors are configured to invoke instructions to cause the network device to perform the method for solving a measurement gap collision as described in the second aspect and embodiments of the second aspect.

Embodiments of the present disclosure also provide a communication device. The communication device includes one or more processors. The processors are configured to invoke instructions to cause the communication device to perform the method for solving a measurement gap collision as described in the first aspect, and embodiments of the first aspect, and/or the method for solving a measurement gap collision as described in the second aspect, and embodiments of the second aspect.

Embodiments of the present disclosure also provide a communication system. The system includes a terminal and a network device, where the terminal is configured to implement the method for solving a measurement gap collision as described in the first aspect and embodiments of the first aspect, and the network device is configured to implement the method for solving a measurement gap collision as described in the second aspect and embodiments of the second aspect.

Embodiments of the present disclosure also provide a storage medium storing instructions that, when executed on a communication device, cause the communication device to perform the method for solving a measurement gap collision as described in the first aspect and embodiments of the first aspect, and/or the method for solving a measurement gap collision as described in the second aspect and embodiments of the second aspect.

The present disclosure also provides an apparatus for implementing any of the above methods. For example, an apparatus is proposed, which includes units or modules for implementing the steps performed by the terminal in any of the above methods. For example, another apparatus is proposed, which includes units or modules for implementing the steps performed by the network device (e.g., an access network device, a core network functional node, a core network device, etc.) in any of the above methods.

It should be understood that the division of the units or modules in the above apparatus is only a logical functional division. In actual implementation, they may be fully or partially integrated into a physical entity, or they may be physically separated. Furthermore, the units or modules in the apparatus may be implemented in the form of processor calling software: for example, the apparatus includes a processor, the processor is connected to a memory, the memory stores instructions, and the processor calls the instructions stored in the memory to implement any of the above methods or to implement the functions of the units or modules of the above apparatus. The processor is, for example, a general-purpose processor such as a central processing unit (CPU) or a microprocessor, and the memory is either internal to the apparatus or external to the apparatus. Alternatively, the units or modules in the apparatus may be implemented in the form of hardware circuits. The functions of some or all of the units or modules may be achieved through the design of the hardware circuits. The aforementioned hardware circuits may be understood as one or more processors. For example, in one implementation, the aforementioned hardware circuit is an application-specific integrated circuit (ASIC). The functions of some or all of the aforementioned units or modules are achieved through the design of the logical relationships between the components within the circuit. As another example, in another implementation, the aforementioned hardware circuit may be implemented through a programmable logic device (PLD). Taking a field-programmable gate array (FPGA) as an example, it may include a large number of logic gates. The connection relationships between the logic gates are configured through configuration files, thereby achieving the functions of some or all of the aforementioned units or modules. All units or modules of the above apparatuses may be implemented entirely through processor calling software, or entirely through hardware circuits, or partially through processor calling software with the remaining parts implemented through hardware circuits.

In embodiments of the present disclosure, the processor is a circuit with signal processing capabilities. In one implementation, the processor may be a circuit with instruction read and execute capabilities, such as a central processing unit (CPU), a microprocessor a graphics processing unit (GPU) (which may be understood as a microprocessor), or a digital signal processor (DSP). In another implementation, the processor may implement certain functions through the logical relationship of hardware circuits. The logical relationship of the aforementioned hardware circuits is fixed or reconfigurable. For example, the processor is a hardware circuit implemented by an application-specific integrated circuit (ASIC) or a programmable logic device (PLD), such as an FPGA. In reconfigurable hardware circuits, the process of the processor loading the configuration document and implementing the hardware circuit configuration may be understood as the process of the processor loading instructions to achieve the functions of some or all of the above units or modules. In addition, the processor may also be hardware circuits designed for artificial intelligence, which may be understood as ASICs, such as Neural Network Processing Units (NPUs), Tensor Processing Units (TPUs), and Deep Learning Processing Units (DPUs).

Fig. 9 is a schematic diagram of the structure of the communication device 9100 provided in an embodiment of the present disclosure. The communication device 9100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 9100 may be used to implement the methods described in the above-mentioned method embodiments, for details, reference may be made to the description in the above-mentioned method embodiments.

As shown in Fig. 9, the communication device 9100 includes one or more processors 9101. The processor 9101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. The processor 9101 is configured to invoke instructions to cause the communication device 9100 to perform any of the above methods.

In some embodiments, the communication device 9100 includes one or more memories 9102 for storing instructions. In an implementation, all or part of the memory 9102 may be located outside the communication device 9100.

In some embodiments, the communication device 9100 further includes one or more transceivers 9103. In a case where the communication device 9100 includes one or more transceivers 9103, the transceiver 9103 performs at least one of the communication steps such as sending and/or receiving in the above methods, and the processor 9101 performs other steps.

In some embodiments, the transceiver may include a receiver and/or a transmitter, which may be separate or integrated. In an implementation, the terms such as transceiver, transceiver unit, transceiving machine, transceiver circuit, etc. may be replaced with each other, and the terms such as transmitter, transmitting unit, transmitting machine, transmitting circuit and the like may be replaced with each other, and the terms such as receiver, receiving unit, receiving machine, receiving circuit and the like may be replaced with each other.

In an implementation, the communication device 9100 further includes one or more interface circuits 9104, and the interface circuit 9104 is connected with the memory 9102. The interface circuit 9104 may be used to receive signals from the memory 9102 or other devices, and may be used to send signals to the memory 9102 or other devices. For example, the interface circuit 9104 may read an instruction stored in the memory 9102 and send the instruction to the processor 9101.

The communication device 9100 described in the above embodiments may be a network device or a terminal, but the scope of the communication device 9100 described in the present disclosure is not limited to this. The structure of the communication device 9100 may not be limited by FIG. 9. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

Fig. 10 is a block diagram illustrating a chip 10200 according to an embodiment of the present disclosure. In a case where the communication device 9100 may be a chip or a chip system, reference may be made to the block diagram of the chip 10200 shown in Fig. 10, but it is not limited to this.

The chip 10200 includes one or more processors 10201, and the processor 10201 is configured to invoke instructions to cause the chip 10200 to perform any of the above methods.

In some embodiments, the chip 10200 also includes one or more interface circuits 10202. In an implementation, the interface circuit 10202 is connected to the memory 10203. The interface circuit 10202 may be used to receive signals from the memory 10203 or other devices, and the interface circuit 10202 may be used to send signals to the memory 10203 or other devices.

For example, the interface circuit 10202 may read an instruction stored in the memory 10203 and send the instruction to the processor 10201. In an implementation, terms such as interface circuit, interface, transceiver pin, transceiver and the like may be replaced with each other.

In some embodiments, the chip 10200 further includes one or more memories 10203 for storing instructions. In an implementation, all or part of the memory 10203 may be outside the chip 10200.

The present disclosure further proposes a storage medium on which instructions are stored, which, when executed on the communication device 9100, cause the communication device 9100 to perform any of the above methods. In an implementation, the storage medium is an electronic storage medium. In an implementation, the storage medium is a computer-readable storage medium, but it is not limited to this, and it may also be a storage medium readable by other devices. In an implementation, the storage medium may be a non-transitory storage medium, but it is not limited to this, and it may also be a transitory storage medium.

The present disclosure further provides a program product which, when executed by the communication device 9100, causes the communication device 9100 to perform any of the above methods. In an implementation, the program product is a computer program product.

The present disclosure further provides a computer program that, when run on a computer, causes the computer to perform any of the above methods.

## Claims

1. A method for solving a measurement gap collision, performed by a terminal, comprising:
sending a first message to a network device, wherein the first message indicates a solution preferred by the terminal for the measurement gap collision.

2. The method according to claim 1, wherein the solution comprises at least one of:
a first solution, wherein the first solution is that the terminal keeps all colliding measurement gaps; or
a second solution, wherein the second solution is that the terminal performs measurement according to priority information of colliding measurement gaps.

3. The method according to claim 1 or 2, further comprising:
receiving a second message sent by a network device, wherein the second message indicates allowing the terminal to report the preferred solution for the measurement gap collision.

4. The method according to any one of claims 1 to 3, further comprising:
determining whether the network device allows the terminal to use the solution preferred by the terminal according to an indication from the network device.

5. The method according to claim 4, wherein a manner in which the network device indicates whether the terminal is allowed to use the solution preferred by the terminal comprises at least one of:
an explicit indication; or
an implicit indication.

6. The method according to claim 5, wherein the manner comprises the explicit indication, and determining whether the network device allows the terminal to use the solution preferred by the terminal according to the indication from the network device comprises:
receiving a third message sent by the network device, wherein the third message comprises third information, and the third information indicates whether the terminal is allowed to use the solution preferred by the terminal; and
determining that the network device allows the terminal to use the solution preferred by the terminal according to the third information indicating that the terminal is allowed to use the solution preferred by the terminal; or determining that the network device does not allow the terminal to use the solution preferred by the terminal according to the third information indicating that the terminal is not allowed to use the solution preferred by the terminal.

7. The method according to claim 5 or 6, wherein the manner comprises the implicit indication, and determining whether the network device allows the terminal to use the solution preferred by the terminal according to the indication from the network device comprises:
receiving a fourth message sent by the network device, wherein the fourth message comprises measurement gap configuration information configured by the network device for the terminal, and determining that the network device allows the terminal to use the solution preferred by the terminal according to the measurement gap configuration information; or
determining that the network device does not allow the terminal to use the solution preferred by the terminal in response to a first timer expiring, wherein the first timer is started or restarted when the terminal sends the first message to the network device.

8. The method according to any one of claims 4 to 7, further comprising:
resending the first message to the network device, after determining that the network device does not allow the terminal to use the solution preferred by the terminal.

9. The method according to claim 8, wherein resending the first message to the network device comprises:
resending the first message to the network device in response to a second timer expiring, wherein the second timer is started or restarted when the terminal sends the first message to the network device.

10. The method according to any one of claims 4 to 7, further comprising:
using a solution different from the solution preferred by the terminal, after determining that the network device does not allow the terminal to use the solution preferred by the terminal.

11. The method according to any one of claims 4 to 7, further comprising:
using the solution preferred by the terminal, or using a solution different from the solution preferred by the terminal, after determining that the network device does not allow the terminal to use the solution preferred by the terminal.

12. A method for solving a measurement gap collision, performed by a network device, comprising:
receiving a first message sent by a terminal, wherein the first message indicates a solution preferred by the terminal for the measurement gap collision.

13. The method according to claim 12, wherein the solution comprises at least one of:
a first solution, wherein the first solution is that the terminal keeps all colliding measurement gaps; or
a second solution, wherein the second solution is that the terminal performs measurement according to priority information of colliding measurement gaps.

14. The method according to claim 12 or 13, further comprising:
sending a second message to the terminal, wherein the second message indicates allowing the terminal to report the preferred solution for the measurement gap collision.

15. The method according to any one of claims 12 to 14, further comprising:
indicating to the terminal whether the terminal is allowed to use the solution preferred by the terminal.

16. The method according to claim 15, wherein a manner of indicating to the terminal whether the terminal is allowed to use the solution preferred by the terminal comprises at least one of:
an explicit indication; or
an implicit indication.

17. The method according to claim 16, wherein the manner comprises the explicit indication, and indicating to the terminal whether the terminal is allowed to use the solution preferred by the terminal comprises:
sending a third message to the terminal, wherein the third message comprises third information, and the third information indicates whether the terminal is allowed to use the solution preferred by the terminal.

18. The method according to claim 16 or 17, wherein the manner comprises the implicit indication, and indicating to the terminal whether the terminal is allowed to use the solution preferred by the terminal comprises:
sending a fourth message to the terminal, wherein the fourth message comprises measurement gap configuration information configured by the network device for the terminal, and the measurement gap configuration information is used by the terminal to determine that the network device allows the terminal to use the solution preferred by the terminal; or
determining not to allow the terminal to use the solution preferred by the terminal, wherein the network device is not expected to send the third message or the fourth message to the terminal.

19. The method according to any one of claims 15 to 18, wherein the network device indicates to the terminal that the terminal is not allowed to use the solution preferred by the terminal, and
the method further comprises:
receiving the first message resent by the terminal.

20. The method according to any one of claims 15 to 18, wherein the network device indicates to the terminal that the terminal is not allowed to use the solution preferred by the terminal, and the network device expects the terminal to use a solution different from the solution preferred by the terminal.

21. An apparatus for solving a measurement gap collision, comprising:
a transceiver module, configured to send a first message to a network device, wherein the first message indicates a solution preferred by a terminal for the measurement gap collision.

22. An apparatus for solving a measurement gap collision, comprising:
a transceiver module, configured to receive a first message sent by a terminal, wherein the first message indicates a solution preferred by the terminal for the measurement gap collision.

23. A terminal, comprising:
one or more processors,
wherein the one or more processors are configured to invoke instructions to cause the terminal to perform the method for solving a measurement gap collision according to any one of claims 1-11.

24. A network device, comprising:
one or more processors,
wherein the one or more processors are configured to invoke instructions to cause the network device to perform the method for solving a measurement gap collision according to any one of claims 12-20.

25. A communication device, comprising:
one or more processors,
wherein the one or more processors are configured to invoke instructions to cause the communication device to perform the method for solving a measurement gap collision according to any one of claims 1-11 or any one of claims 12-20.

26. A communication system, comprising a terminal and a network device, wherein the terminal is configured to implement the method for solving a measurement gap collision according to any one of claims 1-11, and the network device is configured to implement the method for solving a measurement gap collision according to any one of claims 12-20.

27. A storage medium storing instructions that, when executed on a communication device, cause the communication device to perform the method for solving a measurement gap collision according to any one of claims 1-21 or any one of claims 12-20.
